# EUROPEAN PATENT APPLICATION

(11) **EP 1 482 424 A2**
(43) Date of publication of application: **01.12.2004**
(21) Application number: 04012613.8
(22) Date of filing: 27.05.2004
(51) Int. Cl.: G06F 17/30

(54) **System and method of query transformation**

(30) Priority: 27.05.2003 CA 2429910
(71) Applicant: Cognos Incorporated, Ottawa, Ontario K1G 4k9 (CA)
(72) Inventor: Styles, Michael, Osgoode, Ontario K0A 2W0 (CA)
(74) Representative: Manitz, Finsterwald & Partner GbR

(57) **Abstract**

A query transformation system for transforming nested aggregates in a query is provided. The query transformation system comprises a nested aggregate analysis module for analysing a query that is not supported by a target database system, and a nested aggregate transformation module for transforming the query into a semantieally equivalent query that is supported by the target database system.

## Description

### FIELD OF THE INVENTION

The invention relates generally to data access middleware, and in particular to a system and method of query transformation.

### BACKGROUND OF THE INVENTION

A typical data access environment has a multiplier architecture. For description purposes, it can be separated into three distinct tiers:
- Web server
- Applications
- Data
The tiers are based on business function, and are typically separated by firewalls. Client software, such as a browser or a report-authoring tool, sits above the tiers.

The web server contains a firewall and one or more gateways. All web communication is performed through a gateway. A gateway is responsible for passing on requests to the application server, in tier 2, for execution.

The applications tier contains one or more application servers. The application server runs requests, such as reports and queries that are forwarded by a gateway running on the web server. Typically, one of the components of the applications tier is a query engine, which is data access middleware that provides universal data access to a variety of heterogeneous database systems. The query engine formulates queries (typically SQL) and passes them on to the data tier, through a native database API (such as ODBC) for execution.

The data tier contains database management systems (DBMS), which manage raw data stored in a database. Examples of such systems include Oracle, DB2, and Microsoft SQL Server.

Although a multi-tier architecture can be configured in several different ways, a typical configuration places each tier on a separate computer (server). A database server is typically a "high end" server, and thus can process queries at a relatively fast speed. An application server cannot generally process queries as quickly as a database server.

In order to solve many business questions, a query engine may generate SQL queries that utilize the SQL/OLAP technology introduced in the SQL:1999 standard. However, many database systems do not support this technology. Thus, the SQL queries would have to be performed by the query engine on the application server that is generally slower than the database server. It is desirable to have as much processing performed on the database server.

There is a need to prevent or reduce the amount of local (application server) processing required to process a query. In the past, the application would be responsible for generating SQL that contained no nested OLAP functions. Quite often, generating this type of SQL is more difficult since it is more complex.

One way of overcoming this problem is for the query engine to generate a simple base query for collecting the data, and then process the remainder of the query (including OLAP functions) to produce the desired result. Unfortunately, this solution requires extensive processing time on the application server. It is desirable to have a way of transforming the query into a form that minimizes the processing time on the application server. Ideally, the transformed query would be processed by the DBMS in its entirety.

### SUMMARY OF THE INVENTION

It is an object of the present invention to provide a method of nested aggregate transformation in a database system that supports SQL/OLAP, but does not support nested OLAP functions.

In accordance with an embodiment of the present invention, there is provided a query transformation system for transforming nested aggregates in a query. The query transformation system comprises a nested aggregate analysis module for analysing a query that is not supported by a target database system, and a nested aggregate Transformation module for transforming the query into a semantically equivalent query that is supported by the target database system.

In accordance with another embodiment of the present invention, there is provided a method of nested aggregate transformation. The method comprises the steps of analysing a query that is not supported by a target database system, and transforming the query into a semantically equivalent query that is supported by the target database system.

In accordance with another embodiment of the present invention, there is provided a method of nested aggregate transformation. The method comprises the steps of generating a derived table to compute aggregates, extracting nested aggregates and moving nested aggregates into a select list of The derived table, and determining whether the transformation is to be performed. The step of determining includes the steps of detecting nested aggregates, detecting framed aggregates and report aggregates, performing the transformation if nested aggregates are detected, and adding expressions to the inner select list of the derived table. The step of performing includes the steps of marking a nested aggregate for insertion into an inner select list, marking a report aggregate for insertion into the inner select list if it does not contain a nested aggregate or there are framed aggregates present, and detecting framed aggregates.

In accordance with another embodiment of the present invention, there is provided a computer data signal embodied in a carrier wave and representing sequences of instructions which, when executed by a processor, cause the processor to perform a method of nested aggregate transformation. The method comprises the steps of analysing a query that is not supported by a target database system, and transforming The query into a semantically equivalent query that is supported by the target database system.

In accordance with another embodiment of the present invention, there is provided a computer-readable medium having computer readable code embodied therein for use in the execution in a computer of a method of nested aggregate transformation. The method comprises the steps of analysing a query that is not supported by a target database system, and transforming the query into a semantically equivalent query that is supported by the target database system.

In accordance with another embodiment of the present invention, there is provided a computer program product for use in the execution in a computer of a query transformation system for transforming nested aggregates in a query. The computer program product comprises a nested aggregate analysis module for analysing a query that is not supported by a target database system, and a nested aggregate transformation module for transforming the query into a semantically equivalent query that is supported by the target database system.

### BRIEF DESCRIPTION OF THE DRAWINGS

Figure 1 shows a typical data access environment.
Figure 2 shows a nested aggregate transformation system, in accordance with an embodiment of the present invention.
Figure 3 shows in a flowchart an example of a method of a nested aggregate transfonnation, in accordance with an embodiment of the nested aggregate transformation system.
Figure 4 shows in a flowchart another example of a method of a nested aggregate transformation, in accordance with an embodiment of the nested aggregate transformation system.

### DETAILED DESCRIPTION OF THE PREFERRED EMBODIMENTS

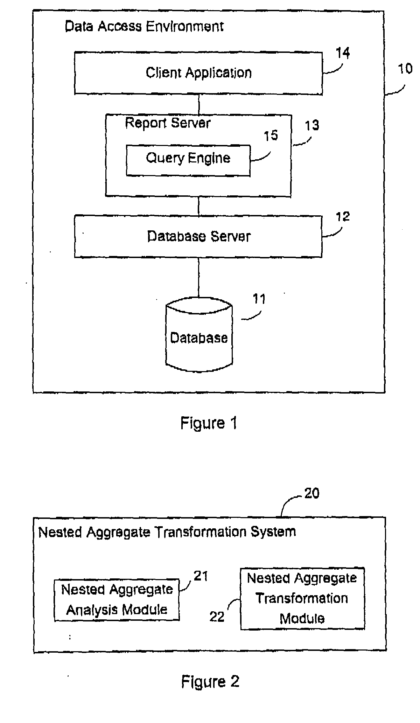

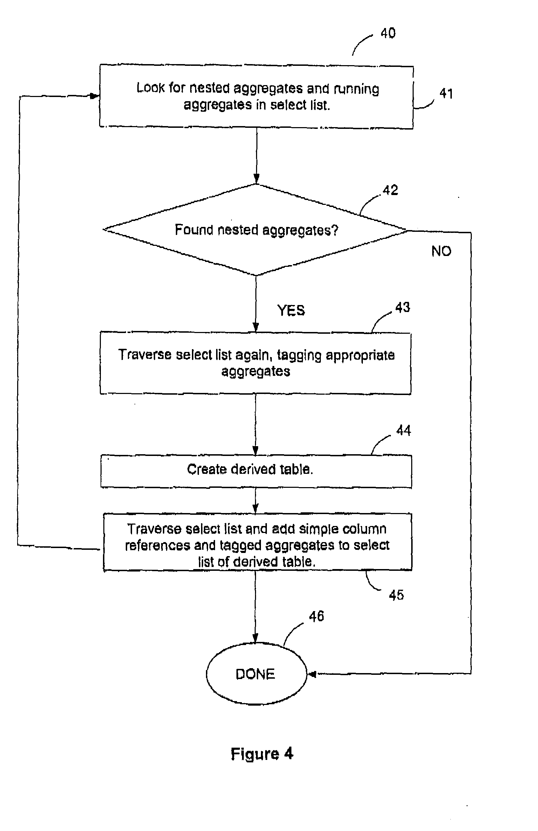

Figure 1 shows a typical data access environment 10 for processing data. Typically, data is stored in a database 11. A database management system (DBMS) running on a database server 12 accesses the raw data stored in the database 11. A query engine 15, running on a report server (or application server) 13 is used to generate reports on the raw data and instruct the DBMS on the database server 12 to obtain information pertaining to the raw data in the database 11. The query engine 15 provides universal data access to a variety of heterogeneous database systems. An end user uses a client application 14, running on a client workstation, to facilitate application server 13 operations.

In order to solve many business questions, a query engine 15 generates SQL queries that utilize the SQL/online analytical programming (OLAP) technology introduced in the SQL:1999 standard. These SQL queries include SQL/CLAP functions (windowed aggregates). However, many database systems 12 do not support this technology. In order to prevent or reduce the amount of local (application server) processing required to process these types of queries, the query engine 15 attempts to generate semantically equivalent queries that can be processed on the database server 12 by the target database system. These semantically equivalent queries included standard aggregate functions and a GROUP BY operator.

In order to solve many business questions, SQL (Structured Query Language) queries are generated that utilize the SQL/OLAP (Online Analytical Programming) technology introduced in the SQL:1999 standard. Quite often, these queries contain OLAP functions whose arguments and/or window specifications contain other (nested) OLAP functions. The SQL:1999 standard (and most databases with a SQL/OLAP capability) does not permit this.

Figure 2 shows a nested aggregate transformation system 20 for generating a query with no nested OLAP functions that is semantically equivalent to a query having nested OLAP functions. The nested aggregate transformation System 20 comprises a nested aggregate analysis module 21 for analyzing SQL/OLAP queries containing nested OLAP functions that are not supported by a target database system, and a nested aggregate transformation module 22 for transforming these SQL/OLAP queries into semantically equivalent queries that are supported by the target database system. The nested aggregate analysis module 21 may include a nested aggregate detection unit for traversing a query and detecting a nested aggregate in the query, and a nested aggregate tagging unit for traversing a query and tagging the nested aggregate. The nested aggregate transformation module may include a derived table for storing a copy of the tagged nested aggregate, and a query editor for inserting the tagged nested aggregate into a query that is supported by a target database system.

The nested aggregate transformation system 20 may be implemented as a subsystem of the query engine 15 in the data access environment 10. This transformation 20 may generate queries that can be processed in their entirety on the database server 12, or queries that require processing on both the application server 13 and the database server 12.

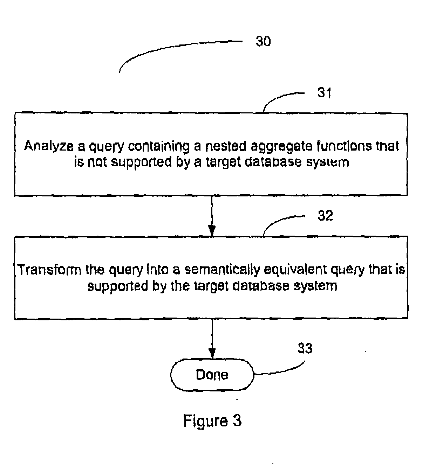

Figure 3 shows in a flowchart an example of a method of nested aggregate transformation (30), in accordance with an embodiment of the nested aggregate transformation system 20. The method (30) begins with analyzing a query containing a nested aggregate functions that is not supported by a target database system (31). Next, the query is transformed into a semantically equivalent query that is supported by the target database system (32). The method (30) is done (33).

Advantageously, the nested aggregate transformation system 20 cases the task of generating SQL by eliminating the need to analyze all aggregation required by the report, and by eliminating the need to generate nested derived tables. Furthermore, the nested aggregate transformation system 20 allows the query engine 15 to only perform the transformation if necessary.

There are two types of OLAP functions: framed functions and report functions. Framed OLAP functions contain a window frame specification (ROWS or RANGE) and an ORDER BY clause. Through window frames, capabilities such as cumulative (running) sums and moving averages can be supported. Report functions do not contain a window frame specification, and produce the same value for each row in a partition.

A nested aggregate/OLAP function is any aggregate/OLAP function appearing inside the specification of another aggregate/OLAP function. These aggregates/OLAP functions may appear in the operand, the PARTITION BY clause, the AT (compute break) clause, or the ORDER BY clause. Nested aggregates are computed prior to the parent aggregate being computed. Framed OLAP functions are given special attention when performing the nested aggregate transformation 20 due to the presence of the ORDER BY clause.

Figure 4 shows a flowchart of an example of a method of nested aggregate transformation (40), in accordance with an embodiment of the nested aggregate transformation system 20. The method (40) begins with searching for nested aggregate: and framed aggregates in a select list (41). If nested aggregates are not found (42), then the method is done (46). If nested aggregates are found (42), then the select list is traversed again with tags added to appropriate aggregates (43). A derived table is created (44). Once again, the select list is traveled and simple column references and tagged aggregates are added to the select list of the derived table (45). The method (40) is done (46).

The nested aggregate transformation system 20 generates a derived table to compute these aggregates. Nested aggregates are extracted and moved into the select list of the derived table. This process may be repeated several times, depending on the level of nesting.

To determine whether the transformation must be performed, each expression in the select list is analyzed to detect the presence (if any) of nested aggregates (31). This analysis comprises the following:
- Detection of nested aggregates.
- Detection of framed aggregates (nRAggregates) and report aggregates (nXAggregates).
If nested aggregates are detected (32), the transformation is performed.

The transformation performs a second Analysis of the select list to determine how the transformation should be performed. This analysis comprises:
- Marking a nested aggregate for insertion into the inner select list.
- Marking a report aggregate for insertion into the inner select list if it does not contain a nested aggregate or there are framed aggregates present (nRAggregates > 0).
- Detection of framed aggregates.
Once this is complete, the select list is traversed again, with the following types of expressions being added to the inner select list:
1. Simple column references.
2. Aggregates marked for insertion. For all other aggregates, the AT, PARTITION BY, and ORDER BY clauses are processed according to the rules outlined here.
3. Expressions that do not contain nested aggregates or framed aggregates. All other expressions are traversed, and processed according to the rules outlined here.

Once the nested aggregate transformation is performed, other query transformations can be performed as required.

### Example 1

In this example, a nested OLAP function appears in the operand of another OLAP function, so the query must be transformed.

### Original Query

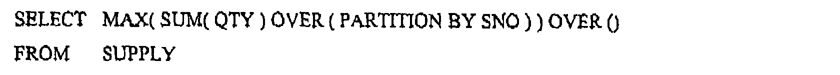

### Transformed Query

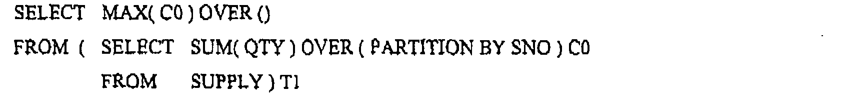

### Explanation

Against Oracle9i, the original query will result in an error since the OLAP function MAX contains a nested SUM function in its operand. To eliminate the nesting, a derived table T1 is created, and the SUM function is pushed into the select list.

### Example 2

In this example, a nested OLAP function appears in the operand of an OLAP function. As well, the same nested OLAP function appears on its own in the select list. This query must be transformed.

### Original Query

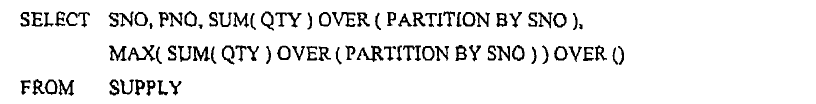

### Transformed Query

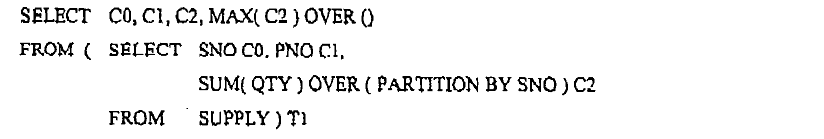

### Explanation

Against Oracle 9i, the original query will result in an error since the OLAP function MAX contains a nested SUM function in its operand. To eliminate the nesting, a derived table T1 is created, and the SUM function is pushed into the select list. Note also that a small optimization is performed with respect to the first OLAP function (SUM) in the select list of the original query, since it is identical to the operand of the MAX function. The SUM function only needs to be computed once.

### Example 3

In this example, a nested OLAP function appears in the operand of an OLAP function. As well, the nested OLAP function itself contains a nested OLAP function in its PARTITION BY clause. This query must be transformed.

### Original Query

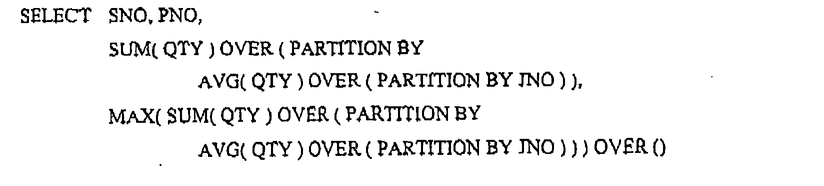

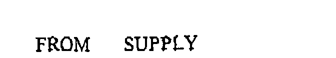

### Transformed Query

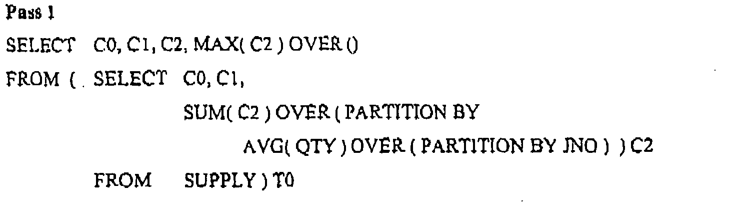

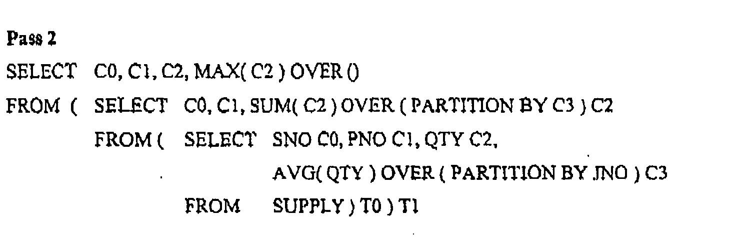

### Explanation

Against Oracle9i, the original query will result in an error since the OLAP functions SUM and MAX contain nested OLAP functions. This particular example requires 2 passes. In the first pass, the SUM function is pushed into a derived table to eliminate all nested aggregation in the top-level select list. The second pass, required since the SUM function contains a nested AVG function in its PARTITION BY clause, results in the AVG function being moved into another derived table.

### Example 4

In this example, a nested OLAP function appears in the operand of an OLAP function. As well, the select list contains a framed aggregate that computes a cumulative SUM. This query must be transformed.

### Original Query

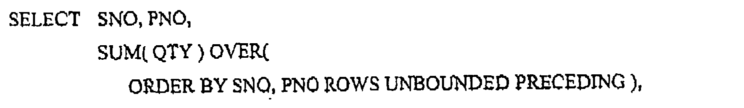

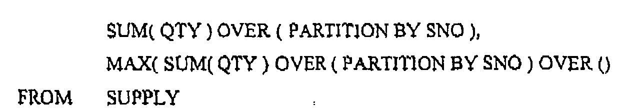

### Transformed Query

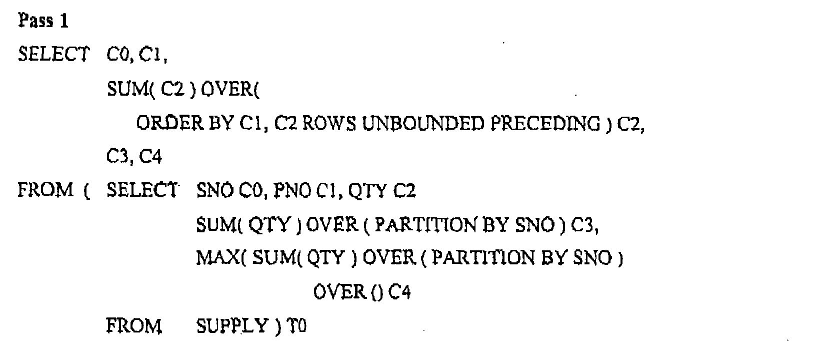

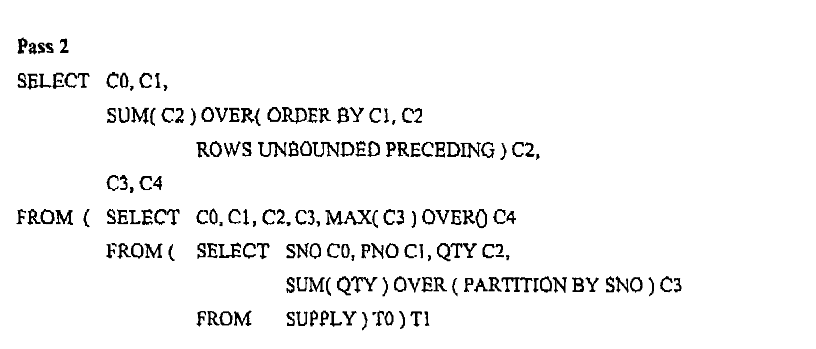

### Explanation

Against Oracle9i, the original query will result in an error since the OLAP function MAX contains a nested SUM function in its operand. This particular example requires 2 passes. In the first pass, the SUM and MAX functions are pushed into a derived table since the main select list contains a framed aggregate. The framed aggregate is left in the main select list since it requires the data to be ordered a specific way to compute the value. If this aggregate was pushed into the inner select list, any sorting required to compute aggregates in the main select may disrupt the ordering of values produced by the framed aggregate. The second pass, required since the MAX function contains a nested SUM function in its operand, results in the SUM function being moved into another derived table.

The systems and methods according to the present invention may be implemented by any hardware, software or a combination of hardware and software having the functions described above. The software code, either in its entirety or a part thereof, may be stored in a computer readable memory. Further, a computer data signal representing the software code that may be embedded in a carrier wave may be transmitted via a communication network. Such a computer readable memory and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. A query transformation system for transforming nested aggregates in a query, the query transformation system comprising:
a nested aggregate analysis module for analysing a query that is not supported by a target database system; and
a nested aggregate transformation module for transforming the query into a semantically equivalent query that is supported by the target database system.

2. The query transformation system as claimed in claim 1, wherein the nested aggregate analysis module includes:
a nested aggregate detection unit for traversing a query and detecting a nested aggregate in the query; and
a nested aggregate tagging unit for traversing a query and tagging the nested aggregate.

3. The query transformation system as claimed in claim 1, wherein the nested aggregate transformation module includes:
a derived table for storing a copy of a tagged nested aggregate; and
a query editor for inserting the tagged nested aggregate into a query that is supported by a target database system.

4. A method of nested aggregate transformation, the method comprising the steps of:
analysing a query that is not supported by a target database System; and
transforming the query into a semantically equivalent query that is supported by the target database system.

5. The method as claimed in claim 4, wherein the step of analysing includes the steps of:
detecting a nested aggregate in a select list of a query; and
adding a tag to the nested aggregate.

6. The method as claimed in claim 4, wherein the step of analysing includes the steps of:
creating a derived table;
adding a column reference to a select list in the derived table; and
adding the tagged nested aggregate to the select list of the derived table.

7. A method of nested aggregate transformation, the method comprising the steps of:
generating a derived table to compute aggregates;
extracting nested aggregates and moving nested aggregates into a select list of the derived table; and
determining whether the transformation is to be performed, including the steps of:
detecting nested aggregates; and
detecting framed aggregates and report aggregates;
if nested aggregates are detected, performing the transformanon, including the steps of:
marking a nested aggregate for insertion into an inner select list;
marking a report aggregate for insertion into the inner select list if it does not contain a nested aggregate or there are framed aggregates present; and
detecting framed aggregates; and
adding expressions to the inner select list of the derived table.

8. A computer data signal embodied in a carrier wave and representing sequences of instructions which, when executed by a processor, cause the processor to perform a method of nested aggregate transformation, the method comprising the steps of:
analysing a query that is not supported by a target database system; and
transforming the query into a semantically equivalent query that is supported by the target database system.

9. A computer-readable medium having computer readable code embodied therein for use in the execution in a computer of a method of nested aggregate transformation, the method comprising the steps of:
analysing a query that is not supported by a target database system; and
transforming the query into a semantically equivalent query that is supported by the target database system.

10. A computer program product for use in the execution in a computer of a query transformation system for transforming nested aggregates in a query, the computer program product comprising;
a nested aggregate analysis module for analysing a query that is not supported by a target database system; and
a nested aggregate transformation module for transforming the query into a semantically equivalent query that is supported by the target database system.
